# EUROPEAN PATENT SPECIFICATION

(11) **EP 0 758 155 B1**
(45) Date of publication and mention of the grant of the patent: **15.11.2000**
(21) Application number: 96305866.4
(22) Date of filing: 09.08.1996
(51) Int. Cl.: H02K 5/173

(54) **Electric drive motor with a compound bearing assembly**
Elektrischer Antriebsmotor mit mehrteiligem Lager
Moteur électrique d'entraînement muni d'un palier composé

(30) Priority: 09.08.1995 JP 22476395
(43) Date of publication of application: 12.02.1997
(73) Proprietor: MINEBEA KABUSHIKI-KAISHA, Kitasaku-gun, Nagano-ken (JP)
(72) Inventor: Obara, Rikuro, c/o Minebea Kabu.-Kaisha, Kitasaku-gun, Nagano-ken (JP)
(74) Representative: Warren, Anthony Robert

(56) References cited:
- EP-A- 0 592 214
- EP-A- 0 620 633
- GB-A- 2 185 790

## Description

The present invention relates to an electric drive motor with a compound bearing assembly used, for example, in rotating portions of a computer and/or its peripheral devices.

In motors used in known computers and/or computer peripheral devices, the bearing assembly is mounted between a motor shaft and a hub portion of a rotor.

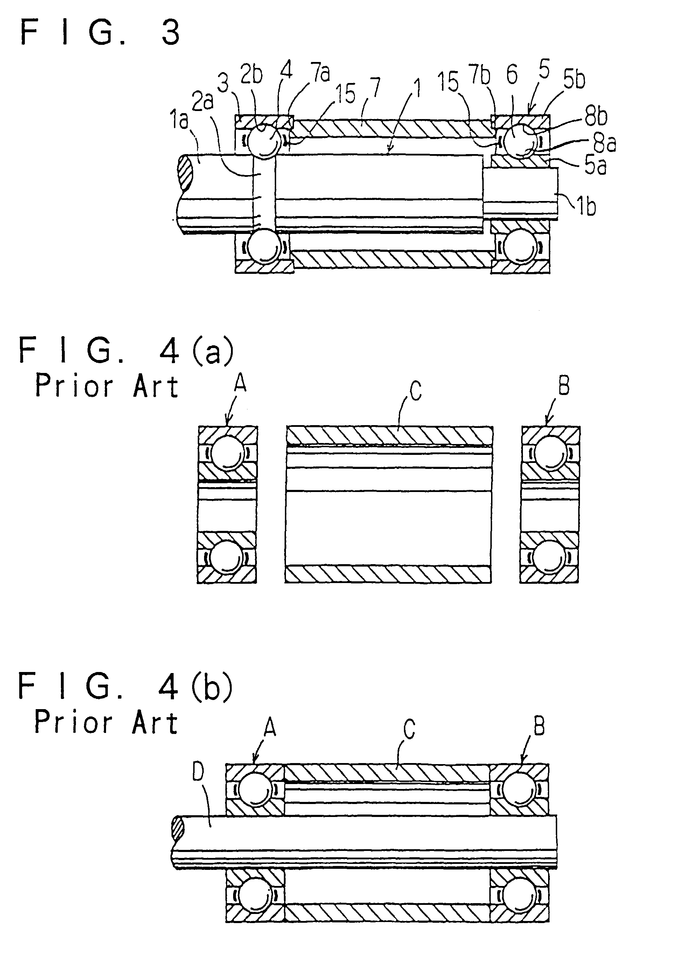

In a conventional compound bearing assembly, as described in patent GB 2185790A and shown in Fig. 4(a) (on which the pre-characterising part of claim 1 is based), a pair of conventional ball bearing units A, B and a sleeve-like spacer C are separately produced and delivered to a user such as a motor manufacturer who in turn mounts these delivered components A, B, C on a motor shaft D of an electrical drive motor to assembly a compound bearing assembly as shown in Fig. 4(b).

As described above, in a conventional bearing assembly, it is necessary for the user or customer, such as the manufacturer or assembler of the computers or peripheral devices, to mount a pair of conventional ball bearing units A, B and a spacer C on the motor shaft D with the ball bearing units A, B spaced apart from each other by the spacer C. Consequently, the conventional bearing assembly suffers from the following problems:
(a) While it needs to provide sufficient rigidity, the motor shaft D is also required to have an outer diameter which is small enough to cooperate with the inner race rings of the ball bearing units A, B;
(b) Since the spacer C is a separate component independent of the pair of ball bearing units A and B, it is necessary for the opposite end surfaces of the spacer C to be machined or otherwise worked to improve their mutual parallelism and also their flatness, in relation to the dimensions of the ball bearing units A, B being assembled together with the spacer C;
(c) Since the spacer C is merely sandwiched between the race rings of the two ball bearing units A and B, it is necessary for the user to coaxially mount the spacer C on the motor shaft D with a high degree of accuracy;
(d) Unless all the other requirements are fulfilled, the motor suffers from vibrations, and therefore performs poorly.

It is an object of the present invention to provide an electric drive motor with a compound bearing assembly in which the above problems are alleviated or effectively solved.

According to the present invention, there is provided an electric drive motor with a compound bearing assembly comprising a shaft provided with a first portion and a second portion; a first outer race ring coaxially disposed around said first portion of said shaft and spaced apart therefrom, said first outer race ring having its inner peripheral surface formed with an outer raceway groove; a plurality of first balls rotatably mounted in said annular outer raceway groove of said first outer race ring; and a sleeve-like spacer having opposite axial end portions, one of its end portions contacting said first outer race ring and said other end portion contacting a second outer race ring of a ball bearing unit which has its inner race ring mounted on said second portion of said shaft, said sleeve-like spacer being coaxially disposed around said shaft while spaced apart therefrom, and extending axially between said first outer race ring and said second outer race ring of said ball bearing unit which is provided with a plurality of second balls between said inner race ring and said second outer race ring; whereby said first outer race ring, said sleeve-like spacer, said plurality of first balls, said ball bearing unit, and said shaft are assembled into a compound bearing assembly; characterised in that said shaft is a stepped-diameter shaft the first portion of which has a larger diameter than its second portion; an annular inner raceway groove is formed directly in an outer peripheral surface of the larger diameter first portion of the shaft spaced from the first outer race ring to form an annular space therebetween in which said first balls are rotatably mounted; said end portions of said sleeve-like spacer are provided with reduced diameter portions, one reduced diameter portion being fitted in said first outer race ring and said other reduced diameter portion being fitted in said second outer race ring; said larger diameter portion of said shaft having its base-end portion fixedly mounted on a base member of said motor substantially at right angles; and said motor having a central hub portion of its rotor fixedly mounted on said compound bearing assembly.

In one embodiment, the outer diameter of the inner race ring of the ball bearing unit in the compound bearing assembly is the same as that of the larger diameter portion of the stepped diameter shaft, and the outer and inner diameters of the second outer race ring of the ball bearing unit in the compound bearing assembly are the same as those of the first outer race ring respectively, whereby the first and the second balls are permitted to be the same in diameter.

Embodiments of the present invention will now be described, by way of example, with reference to the accompanying drawings, in which:-
Fig. 1 is a sectional side view of an electric drive motor, of an outer-rotor type, with a compound bearing assembly in accordance with the present invention;
Fig. 2 is a sectional side view of an electric drive motor, of an inner-rotor type, with a compound bearing assembly in accordance with the present invention,
Fig. 3 is sectional view of a compound bearing assembly in accordance with the present invention;
Fig. 4(a) is a longitudinal sectional view of a conventional bearing assembly prior to assembly, illustrating separated ball bearing units and a spacer; and
Fig. 4(b) is a sectional view of the bearing assembly of Fig. 3, illustrating the ball bearing units and the spacer thus assembled on the motor shaft.

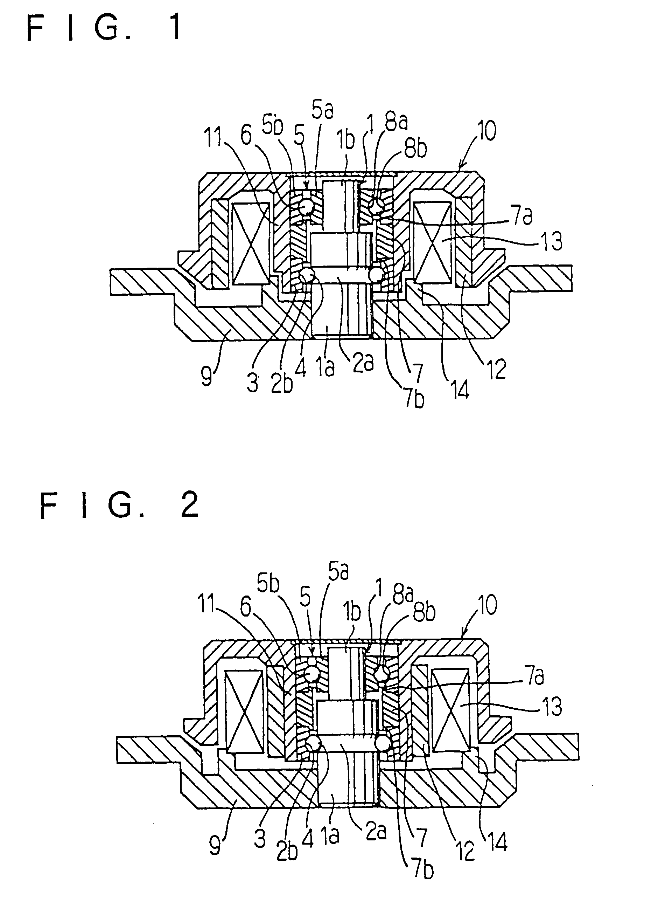

Fig. 1 shows an embodiment of an electric drive motor in accordance with the present invention, of an outer-rotor type, with a compound bearing assembly.

Fig. 2 shows another embodiment of an electric drive motor in accordance with the present invention, of an inner-rotor type, with a compound bearing assembly.

Fig. 3 illustrates the compound bearing assembly used in both of these motors.

Now, referring to Fig. 3, a stepped-diameter shaft 1 is provided with a relatively large-diameter portion 1a and a relatively small-diameter portion 1b. An annular inner raceway groove 2a is formed in the outer peripheral surface of the large-diameter portion 1a of the shaft (i.e. motor shaft) 1.

A first outer race ring 3 is disposed opposite the inner raceway groove 2a, and is provided with an annular outer raceway groove 2b in its inner peripheral surface. A plurality of first balls 4 are rotatably mounted in a ball retainer 15 between the inner raceway groove 2a of the shaft 1 and the outer raceway groove 2b of the first outer race ring 3.

A conventional ball bearing unit 5, comprising an inner race ring 5a, a second outer race ring 5b and a plurality of second balls 6 rotatably mounted in the ball retainer 15 between the race rings 5a and 5b, has its inner race ring 5a fixedly mounted on the small-diameter portion 1b of the shaft 1, in an insertion manner.

A sleeve-like spacer 7 is arranged coaxially with the shaft 1 so as to cover the shaft 1, and is provided with a pair of reduced or small-diameter portions 7a, 7b, for example annular steps, in or at its axially opposite end portions. The outer diameter of each of the small-diameter portions 7a, 7b is dimensioned to permit it to accurately fit in to its associated outer race ring 3 or 5b, respectively.

The outer diameter of the inner race ring 5a of the ball bearing unit 5 is equal to the outer diameter of the large-diameter portion 1a of the stepped-diameter shaft 1. Further, there is no difference between the outer and inner diameters of the second outer race rings 5b of the ball bearing unit 5 and the first outer race ring 3 of the large-diameter portion 1a of the shaft 1, so that all the balls 4 and 6 can be of the same diameter.

In this embodiment of the electric drive motor, the inner race ring 5a of the ball bearing unit 5 is slidably mounted on the small-diameter portion 1b of the stepped-diameter shaft 1, and has its outer end surface (i.e. right-hand side as viewed in Fig. 3) is subjected to a predetermined axially inward pre-load. Under such circumstances, the inner race ring 5a of the ball bearing unit 5 is fixed to the small-diameter portion 1b of the stepped-diameter shaft 1 by means of suitable adhesive or like connecting means, and/or is a press or interference fit thereon. Thus the components, such as the spacer 7, the first outer race ring 3, and the ball bearing unit 5 are successively mounted on the shaft 1 to complete the compound bearing assembly.

Incidentally, as can be seen in Fig. 3, the balls 6 are rotatably supported in the ball retainers 15, and travel in the annular inner and outer raceway grooves 2a, 2b, 8a and 8b of the compound bearing assembly.

Although the balls 4, 6 are of the same diameter in the above embodiment of the present invention, it is also possible to use any other balls which are different in diameter from the balls 4, 6. In other words, the second balls 6 used in the small-diameter portion 1b of the shaft 1 may be different in diameter from the first balls 4 used in the large-diameter portion 1a of the shaft 1.

As shown in Fig. 1, the thus assembled compound bearing assembly is then mounted in the electric drive motor of the present invention as follows:

First, the stepped-diameter shaft 1 has its base-end portion (i.e. lower-end portion as viewed in Fig. 1) fixedly mounted in a central bore of a base member 9 of the motor so that the shaft 1 extends upward from the base member 9, at right angles. A central hub portion 11 of a rotor 10 of the motor is then fixedly mounted on the outer race rings 3,5b of the compound bearing assembly, in an insertion manner.

Incidentally, in Fig. 1, the reference numeral: 12 denotes a permanent magnet; 13 an electrically energizing coil wound around a stator yoke (not shown) of the motor; and 14 a yoke holder.

In the embodiment of Fig. 2, the permanent magnet 12 is fixedly mounted on an outer peripheral surface of the central hub portion 11 of the rotor 10.

In these electric drive motors, since the compound bearing assembly thereof has the above construction, the following action and effects are obtained:
(1) Since the first outer race ring 3, first balls 4, spacer 7, ball bearing unit 5 and the stepped diameter shaft 1 have been pre-assembled, for example by the bearing manufacturer, into the compound bearing assembly or unit, the user or motor manufacturer is relieved of the cumbersome work of assembling the compound bearing assembly. The assembly may be easily mounted inside a sleeve-like rotating element (i.e. central hub portion 11 of the rotor 10 of the motor) by inserting the assembly into the rotating element and fixing the assembly therein at the user's end:
(2) Since the compound bearing assembly uses a stepped-diameter shaft 1 provided with the large-diameter portion 1a which has its outer peripheral surface directly formed with the annular inner raceway groove 2a, instead of the conventional type of inner race ring which would require the diameter of the shaft to be reduced, the rigidity of the shaft is improved;
(3) Since the stepped-diameter shaft 1 is provided with the large-diameter portion 1a and therefore possess improved i.e. increased rigidity, it is possible to increase the resonance point of the electric drive motor, so that the motor with the compound bearing assembly may be prevented from resonating or causing resonances in the remaining components of the motor, whereby the performance and reliability of the motor is improved;
(4) The spacer 7 may be fabricated by a bearing maker or manufacturer so as to align with the ball bearing unit 5 and the first outer race ring 3 with a high degree of accuracy. Further, the spacer 7 has its small-diameter annular portions 7a and 7b fitted in the outer race rings 3 and 5b, respectively. In other words, these components 7, 4, 5b are firmly united. As a result, the spacer 7 may be arranged coaxially with the stepped-diameter shaft 1 with a high degree of accuracy, which enables the vibration and noise of the electric drive motor to be reduced considerably in operation;
(5) The number of conventional ball bearing units in the compound bearing assembly is reduced to one, i.e. the ball bearing unit 5. Consequently, the compound bearing assembly uses only one inner race ring 5a, and therefore the number of its component parts is reduced in comparison with conventional bearing assemblies; and
(6) Since the annular inner raceway groove 2a is directly formed in the outer peripheral surface of the large-diameter portion 1a of the shaft 1 no inner race ring is required in the large-diameter portion 1a. This enables the outer diameter of both the first outer race ring 3 and the spacer 7 to be reduced and, therefore, enables the size of the motor to be also reduced so as to meet the needs of industry.

## Claims

1. An electric drive motor with a compound bearing assembly comprising:
a shaft (1) provided with a first portion (1a) and a second portion (1b) ;
a first outer race ring (3) coaxially disposed around said first portion (1a) of said shaft and spaced apart therefrom, said first outer race ring (3) having its inner peripheral surface formed with an outer raceway groove (2b);
a plurality of first balls (4) rotatably mounted in said annular outer raceway groove (2b) of said first outer race ring (3); and
a sleeve-like spacer (7) having opposite axial end portions, one of its end portions (7a) contacting said first outer race ring (3) and said other end portion (7b) contacting a second outer race ring (5b) of a ball bearing unit (5) which has its inner race ring (5a) mounted on said second portion (1b) of said shaft (1), said sleeve-like spacer (7) being coaxially disposed around said shaft (1) while spaced apart therefrom, and extending axially between said first outer race ring (3) and said second outer race ring (5b) of said ball bearing unit (5) which is provided with a plurality of second balls (6) between said inner race ring (5a) and said second outer race ring (5b);
whereby said first outer race ring (3), said sleeve-like spacer (7), said plurality of first balls (4), said ball bearing unit (5), and said shaft (1) are assembled into a compound bearing assembly;
characterised in that:
said shaft is a stepped-diameter shaft (1) the first portion (1a) of which has a larger diameter than its second portion (1b);
an annular inner raceway groove (2a) is formed directly in an outer peripheral surface of the larger diameter first portion (1a) of the shaft spaced from the first outer race ring (3) to form an annular space therebetween in which said first balls (4) are rotatably mounted;
said end portions (7a, 7b) of said sleeve-like spacer (7) are provided with reduced diameter portions (7a,7b), one reduced diameter portion (7a) being fitted in said first outer race ring (3) and said other reduced diameter portion (7b) being fitted in said second outer race ring (5b);
said larger diameter portion (1a) of said shaft (1) having its base-end portion fixedly mounted on a base member (9) of said motor substantially at right angles; and
said motor having a central hub portion (11) of its rotor (10) fixedly mounted on said compound bearing assembly.

2. A motor as claimed in claim 1 wherein:
the outer diameter of said inner race ring (5a) of said ball bearing unit (5) is the same as that of said larger diameter portion (1a) of said shaft (1); and
the outer and inner diameters of said second outer race ring (5b) of said ball bearing unit (5) are the same as those of said first outer race ring (3) respectively;
whereby said first and second balls (4, 6) are of the same diameter.

## Patentansprüche

1. Elektrischer Antriebsmotor mit einem kombinierten Lagersystem, umfassend:
eine Welle (1), die einen ersten Abschnitt (1a) und einen zweiten Abschnitt (1b) aufweist;
einen ersten äußeren Laufring (3), der koaxial um den genannten ersten Abschnitt (1a) der genannten Welle angeordnet und davon beabstandet ist, wobei die innere Umfangsfläche des genannten ersten äußeren Laufrings (3) mit einer äußeren Laufbahnrille (2b) ausgebildet ist;
eine Mehrzahl erster Kugeln (4), die drehbar in der genannten ringförmigen äußeren Laufbahnrille (2b) des genannten ersten äußeren Laufrings (3) montiert sind; und
einen hülsenähnlichen Abstandshalter (7) mit gegenüberliegenden axialen Endabschnitten, wobei einer (7a) der Endabschnitte den genannten ersten äußeren Laufring (3) berührt und der genannte andere Endabschnitt (7b) einen zweiten äußeren Laufring (5b) einer Kugellagereinheit (5) berührt, deren innerer Laufring (5a) an dem genannten zweiten Abschnitt (1b) der genannten Welle (1) montiert ist, wobei der genannte hülsenähnliche Abstandshalter (7) koaxial um die genannte Welle (1) angeordnet und dabei davon beabstandet ist und axial zwischen dem genannten ersten äußeren Laufring (3) und dem genannten zweiten äußeren Laufring (5b) der genannten Kugellagereinheit (5) verläuft, die mit einer Mehrzahl zweiter Kugeln (6) zwischen dem genannten inneren Laufring (5a) und dem genannten zweiten äußeren Laufring (5b) versehen ist;
wobei der genannte erste äußere Laufring (3), der genannte hülsenähnliche Abstandshalter (7), die genannte Mehrzahl erster Kugeln (4), die genannte Kugellagereinheit (5) und die genannte Welle (1) zu einem kombinierten Kugellagersystem zusammengesetzt sind;
dadurch gekennzeichnet, daß:
die genannte Welle eine Welle (1) mit einem abgestuften Durchmesser ist, deren erster Abschnitt (1a) einen größeren Durchmesser hat als deren zweiter Abschnitt (1b) ;
eine ringförmige innere Laufbahnrille (2a) direkt in einer äußeren Umfangsfläche des breiteren ersten Abschnitts (1a) der Welle beabstandet vom ersten äußeren Laufring (3) ausgebildet ist, um einen ringförmigen Raum dazwischen zu bilden, in dem die genannten ersten Kugeln (4) drehbar montiert sind;
die genannten Endabschnitte (7a, 7b) des genannten hülsenähnlichen Abstandshalters (7) mit schmäleren Abschnitten (7a, 7b) ausgestattet sind, wobei ein schmälerer Abschnitt (7a) in dem genannten ersten äußeren Laufring (3) und der genannte andere schmälere Abschnitt (7b) in dem genannten zweiten äußeren Laufring (5b) vorgesehen ist;
wobei der Basisendabschnitt des genannten breiteren Abschnitts (1a) der genannten Welle (1) fest an einem Basiselement (9) des genannten Motors im wesentlichen im rechten Winkel montiert ist; und
wobei ein mittlerer Nabenabschnitt (11) des Rotors (10) des genannten Motors fest an dem genannten kombinierten Lagersystem montiert ist.

2. Motor nach Anspruch 1, bei dem:
der Außendurchmesser des genannten inneren Laufrings (5a) der genannten Kugellagereinheit (5) identisch ist mit dem des genannten breiteren Abschnitts (1a) der genannten Welle (1); und
die Außen- und Innendurchmesser des genannten zweiten äußeren Laufrings (5b) der genannten Kugellagereinheit (5) jeweils identisch sind mit denen des genannten ersten äußeren Laufrings (3);
wobei die genannten ersten und zweiten Kugeln (4, 6) denselben Durchmesser haben.

## Revendications

1. Un moteur d'entraînement électrique avec un ensemble à roulement composite englobant :
un arbre (1) doté d'une première partie (la) et d'une seconde partie (1b) ;
un premier anneau à bague extérieure (3) disposé coaxialement autour de ladite première partie (1a) dudit arbre et écarté de celui-ci, ledit premier anneau à bague extérieure (3) ayant sa surface périphérique intérieure formée avec une rainure de bague de roulement extérieure (2b) ;
une pluralité de premières billes (4) montées de façon à pouvoir tourner dans ladite rainure à bague de roulement annulaire (2b) dudit premier anneau à bague de roulement extérieure (3) ; et
une pièce d'écartement semblable à une douille (7) ayant des parties d'extrémités axiales opposées, l'une de ses parties d'extrémité (7a) étant en contact avec ledit premier anneau à bague extérieure (3) et ladite autre partie d'extrémité (7b) étant en contact avec un second anneau à bague extérieure (5b) d'une unité à roulement à billes (5) dont l'anneau à bague intérieure (5a) est monté sur ladite deuxième partie (1b) dudit arbre (1), ladite pièce d'écartement semblable à une douille (7) étant disposée coaxialement autour dudit arbre (1) tout en étant écartée de celui-ci, et s'étendant axialement entre ledit premier anneau à bague extérieure (3) et ledit deuxième anneau à bague extérieure (5b) de ladite unité à roulement à billes (5) qui est dotée d'une pluralité de secondes billes (6) entre ledit anneau à bague intérieure (5a) et ledit second anneau à bague extérieure (5b) ;
de façon telle que ledit premier anneau à bague extérieure (3), ladite pièce d'écartement semblable à une douille (7), ladite pluralité de premières billes (4), ladite unité à roulement à billes (5) et ledit arbre (1) sont assemblés en un roulement composite ;
caractérisé en ce que :
ledit arbre est un arbre à diamètre à gradins (1) dont la première partie (1a) a un diamètre plus grand que sa seconde partie (1b) ;
une rainure de bague intérieure annulaire (2a) est formée directement dans une surface périphérique extérieure de la première partie à plus grand diamètre (1a) de l'arbre écarté du premier anneau à bague extérieure (3) pour former un espace annulaire entre les deux, dans lequel lesdites premières billes (4) sont montées pour pouvoir tourner ;
lesdites parties d'extrémité (7a, 7b) de ladite pièce d'écartement semblable à une douille (7) sont dotées de parties (7a, 7b) à diamètre réduit, une partie à diamètre réduit (7a) étant adaptée dans ledit premier anneau à bague extérieure (3) et ladite autre partie à diamètre réduit (7b) étant adaptée dans ledit second anneau à bague extérieure (5b) ;
ladite partie à plus grand diamètre (1a) dudit arbre (1) a sa partie d'extrémité de base montée de façon fixe sur un élément de base (9) dudit moteur, sensiblement perpendiculairement ; et
ledit moteur a une partie de moyeu central (11) de son rotor (10) montée de façon fixe sur ledit ensemble à roulement composite.

2. Un moteur selon la revendication 1, dans lequel :
le diamètre extérieur dudit anneau à bague intérieure (5a) de ladite unité à roulement à billes (5) est identique à celui de ladite partie à plus grand diamètre (1a) dudit arbre (1) ; et
les diamètres extérieur et intérieur dudit second anneau à bague extérieure (5b) de ladite unité à roulement à billes (5) sont respectivement identiques à ceux dudit premier anneau à bague extérieure (3) ;
de façon telle que lesdites premières et secondes billes (4, 6) ont un diamètre identique.
